# EUROPEAN PATENT SPECIFICATION

(11) **EP 2 347 688 B1**
(45) Date of publication and mention of the grant of the patent: **31.12.2014**
(21) Application number: 10706468.5
(22) Date of filing: 08.01.2010
(51) Int. Cl.: A47K 3/00, A47K 1/04, A47K 4/00, C08L 67/06, C08J 5/04, E03D 11/02, E03C 1/18, C08L 67/00, C08G 79/02, C08K 3/26, C08K 7/04

(54) **RESIN-BASED COMPOSITE MATERIAL SANITARY APPLIANCE AND MANUFACTURING METHOD THEREOF**
SANITÄTSARTIKEL AUS EINEM VERBUNDSTOFF AUF HARZBASIS UND VERFAHREN ZU SEINER HERSTELLUNG
APPAREIL SANITAIRE EN MATERIAU COMPOSITE A BASE DE RESINE ET PROCEDE DE FABRICATION ASSOCIE

(30) Priority: 22.10.2009 CN 200910154406
(43) Date of publication of application: 27.07.2011
(73) Proprietor: Shanghai Huda Investment & Development Co., Ltd, Shanghai 200060 (CN)
(72) Inventor: CHI, Liqun, Shanghai 200060 (CN)
(74) Representative: Tombling, Adrian George
(86) International application number: PCT/CN2010/000030
(87) International publication number: WO 2011/047521

(56) References cited:
- CN-A- 1 181 772
- CN-A- 1 875 069
- CN-A- 1 903 563
- CN-A- 101 016 405
- CN-A- 101 270 216
- CN-A- 101 514 280
- GB-A- 2 296 251
- JP-A- 5 031 039
- US-A- 3 909 483
- US-A- 5 744 816
- US-A1- 2003 100 651
- US-A1- 2008 090 954

## Description

### FIELD OF THE INVENTION

This invention relates to a sanitary ware, in particular to a composite sanitary ware with resin and scale stone as main raw materials; this invention also discloses a preparation method of the sanitary ware.

### BACKGROUND OF THE INVENTION

Common sanitary wares include bathtub, basin, toilet, urinal and bidet which are made of ceramics. However, ceramics is made by burning in kiln which is not good for the environment and requires a lot of rare earth mineral resource which is rather scarce. Therefore, the mineral resource will be definitely under stress if the situation continues this way.

Recently, some people make sanitary wares with man-made agate or acrylic; see China Invention and Patent 'Acrylic Toilet Made by Pouring Process' with patent No. ZL200410040962.6 (No. of Approval: CN126923C). This patent relates to toilets produced with components made by pouring mixture of resin and agate powder into the empty shell of the interlayer. Although the product made this way has the general characteristics of ceramics products, the process is complicated with rather high cost, restricted thickness and low self-cleaning capacity. On the above basis, another toilet with composite structure of acrylic and glass fiber reinforced plastic is made known to the public; see China Utility Model Patent 'Toilet with Composite Structure of Acrylic and Glass Fiber Reinforced Plastic' with patent No. ZL200620034821.8 (No. of Approval: CN2926350Y).

Also see China Invention and Patent Application Publication 'Artificial Marble

Products and the Preparation Method' with Application No. 96106392.0 (Publication No.: CN1167741A). This application relates to products made by pouring process with marble dust, unsaturated polyester resin, aluminum hydroxide and scale stone as main raw materials, where both the product performance and the preparation process have been improved.

US 5 744 816 A discloses a low pressure sheet moulding composition for making sanitary ware comprising 6.84 wt% unsaturated polyester / styrene monomer mixture (60 wt% unsaturated polyester); 6.84 wt% unsaturated polyester resin / styrene monomer mixture (31-36 wt% monomer); 1.21 wt% hydroxy-terminated polyester; 0.2 wt% polymerization initiator; 10.3 wt% solution of an unsaturated polyester resin/styrene monomer (70-75 wt%) and styrene-ethylene-propylene block copolymer (SEP) (25-30 wt%), used as a shrink control agent; 47.61 wt% filler (limestone dust); and 24 wt% chopped strand fiberglass.

### SUMMARY OF THE INVENTION

The invention is to provide a resin-based composite sanitary ware with high tenacity, strong strength and low cost in view of the above-mentioned technical condition.

The invention is also to provide an energy-saved and environment-protected preparation method of low cost for the resin-based composite sanitary ware.

The invention uses the following technical resolution to work out the above technical problems: a resin-based composite sanitary ware and its characteristic is that it is made by mixing up and injecting the raw materials and solidifying the mould. The ingredients of the raw materials and their weight ratios are as follows:

| | |
|---|---|
| Unsaturated polyester resin | 14%∼30%; |
| Polyester anti-shrinking medium | 6%∼14%; |
| Reinforcing fiber | 11%∼37%; |
| Scale stone | 10%∼20%; |
| Calcium carbonate | 25%∼40%; |
| Initiator | 0.8%∼4%. |

For subsequent homogenized mixture, the unsaturated polyester resin is made by diluting unsaturated resin with styrene, and the weight ratio between the styrene and the unsaturated resin shall be as follows:

| | |
|---|---|
| Styrene | 60%∼65%; |
| Unsaturated resin | 35%∼40%. |

The unsaturated resin can be either o-type unsaturated polyester resin or m-phthalic acid type unsaturated polyester resin.

For subsequent even mixture, the polyester anti-shrinking medium is made by diluting anti-shrinking polyester with styrene, and the weight ratio between the styrene and the polyester shall be as follows:

| | |
|---|---|
| Styrene | 33%∼37%; |
| Polyester | 63%∼67%. |

The reinforcing fiber can be either nylon fiber or polyphosphazenes macro fiber.

The raw materials also contain color paste with weight ratio of 1%∼4% for preparing sanitary wares of different colors.

The raw materials also contain aluminum hydroxide with weight ratio of 6%∼10% for improving the quality and flame-resistant capacity of the product.

As preference, the initiator contains tert-butyl peroxybenzoate and benzoyl peroxide and the weight ratio between the tert-butyl peroxybenzoate and the benzoyl peroxide is 1:2.

A method for preparing resin-based composite sanitary ware, which includes following steps:
(1) Take the raw materials and mix them evenly into agglomerate composites;
(2) Pour the composites into the injection device of the thermosetting plastic injection machine;
(3) Inject the composites into the mould which will be heated to a temperature of between 130°C and 150°C, and maintain the pressure for the solidification;
(4) Open the mould and take out the finished product.

Vacuum extraction will be carried out to the mould in step (3) with vacuum degree of between minus 0.06 Pa and minus 0.09 Pa. Apply high-pressure injection with injection pressure of 100 kg per square centimeter. And the pressure for solidification will be maintained for over 2 to 3 minutes after the injection.

Compared with the current technology, the advantages of the invention lie in: the main raw materials are low-cost scale stone and calcium carbonate which are easily to get and it is made by solidifying the raw materials injected into the mould under high pressure; therefore, the cost is low and without burning, with high energy can be saved and the labor intensity can also be reduced; the efficiency is improved by introducing the thermosetting plastic injection machine; products can be easily manufactured in mass production with low defective rate; moreover, the surface of the product is clean and as smooth as a mirror with high self-cleaning capacity and can be maintained at normal temperature without cold feeling; the whole product is rather light with advantages of high tenacity and strong strength.

### DETAILED DESCRIPTION OF THE INVENTION

Further detailed description will be made to the invention with the following example.

The method for preparing Kunlun rock crystal mainly includes the following steps:
(1). Mix the modified unsaturated polyester resin of high performance into the Kunlun rock crystal powder (with scale stone as primary ingredient), particles of various sizes, polyester fiber, nylon fiber, pigment and initiator, and knead them into agglomerate composites with kneading machine;
(2). Pour the agglomerate composites into the charging basket of the specially-made injection device;
(3). Input the material quantity of a single sanitary product into the computer control program of the thermosetting plastic injection machine, and the quantitative injection machine will inject the materials into the metal mould of the sanitary product with piston barrel and high pressure;
(4). The metal injection mould of the sanitary product will be heated by importing oil and the temperature will be maintained between 130°C and 150°C. Extract vacuum from the metal mould with vacuum degree of between minus 0.06 and minus 0.09 Pa so that there will be no air hole in the sanitary product;
(5). After the composites have been injected into the metal mould, they will be heated to high temperature for solidification and the pressure will be maintained for 2 minutes, which will prevent the product from shrinking or deforming;
(6). After the solidification, the metal mould will be opened with a machine, and the product will be pushed out by the push out system and taken out from the mould with a mechanical hand and placed on the product testing and packaging production line.

Embodiments of different ingredients are as follows:

Embodiment 1: unsaturated polyester resin 18%, polyester anti-shrinking medium 10%, nylon fiber (with length of 3-5mm) 20% (reinforcing fiber); polyester fiber (with length of 5-10mm) 10% (also reinforcing fiber), scale stone particulates of category 1200 13%, calcium carbonate powder of category 1000 27%, color paste 3% and initiator 1 %. The initiator contains tert-butyl peroxybenzoate (TBPB) and benzoyl peroxide (BPO) and the weight ratio between the tert-butyl peroxybenzoate and the benzoyl peroxide is 1:2. Products made in this embodiment will be thin and light with smooth lines and arcs, and its tensile strength can reach 70 Mpa and both the compressive strength and bending strength can be over 100 Mpa.

Swancor 928 produced by Swancor Ind. Co., Ltd. is adopted to be the unsaturated polyester resin in the embodiment with fixed purity of the unsaturated resin of between 35% to 40% and the rest is styrene; and Swancor 7310 produced by Swancor Ind. Co., Ltd. is adopted to be the polyester anti-shrinking medium with fixed purity of the polyester of between 63% to 67% and the rest is styrene.

Embodiment 2: unsaturated polyester resin (Swancor 928) 16%, polyester anti-shrinking medium (Swancor 7310) 12%, polyphosphazenes macro fiber (with length of 3-6mm) 5%, polyester fiber (with length of 5-10mm) 10%, scale stone particulates of category 1200 15%, calcium carbonate powder of category 1000 32%, aluminum hydroxide powder 8%, color paste 3% and initiator 1%. Sanitary products made in this embodiment have excellent flame-resistant capacity reaching UL94V-0 grade and characteristics of high temperature resistance and corrosion resistance and can be maintained at normal temperature without cold feeling. The polyphosphazenes macro fiber used in the embodiment is reinforcing fiber which will improve the strength and the tenacity of the products.

Embodiment 3: polyphosphazenes modified unsaturated polyester resin (diphenyl oxide polyphosphazenes) 16%, polyester anti-shrinking medium (Swancor 7310) 12%, nylon fiber (with length of 3-5mm) 6%, polyester fiber (with length of 5-10mm) 12%, scale stone particulates of category 1200 20%, calcium carbonate powder of category 1000 32%, color paste 3% and initiator 1%. The water contact angle of the sanitary products made in this embodiment reaches 95 degree, which has significantly improved the waterproof capacity; and the surface is clean with self-cleaning capacity, rather high hardness and quite perfect impact resistance and abrasion resistance capacity.

The percents referred to in the above embodiments are all mass percents, and the sanitary products can be washbasin, bathtub, toilet, bidet, urinal and shower tub, etc.

## Claims

1. A resin-based composite sanitary ware, wherein said sanitary ware is made by mixing up and injecting raw materials and solidified by moulds, the ingredients of said raw materials and their weight ratios are as follows:
| | |
|---|---|
| Unsaturated polyester resin | 14%∼30%; |
| Polyester anti-shrinking medium | 6%∼14%; |
| Reinforcing fiber | 11%∼37%; |
| Scale stone | 10%∼20%; |
| Calcium carbonate | 25%∼40%; |
| Initiator | 0.8%∼2.4%; |
and the unsaturated polyester resin is made by diluting unsaturated resin with styrene, and weight ratio between the styrene and the unsaturated resin are as follows:
| | |
|---|---|
| Styrene | 60%∼65%; |
| Unsaturated resin | 35%∼40%. |

2. The resin-based composite sanitary ware of Claim 1, wherein the unsaturated resin is o-type unsaturated polyester resin or m-phthalic acid type unsaturated polyester resin.

3. The resin-based composite sanitary ware of Claim 1, wherein the polyester anti-shrinking medium is made by diluting anti-shrinking polyester with styrene, and weight ratio between the styrene and the polyester are as follows:
| | |
|---|---|
| Styrene | 33%~37%; |
| Polyester | 63%∼67%. |

4. The resin-based composite sanitary of Claim 1, wherein the reinforcing fiber is nylon fiber or polyphosphazenes macro fiber.

5. The resin-based composite sanitary of Claim 1, wherein the raw materials also contain color paste with weight ratio of 1%∼4%.

6. The resin-based composite sanitary ware of Claim 1, wherein the raw materials also contain aluminum hydroxide with weight ratio of 6%∼10%.

7. The resin-based composite sanitary ware of Claim 1, wherein the initiator contains tert-butyl peroxybenzoate and benzoyl peroxide and the weight ratio between the tert-butyl peroxybenzoate and the benzoyl peroxide is 1:2.

8. A method for preparing the resin-based composite sanitary ware to any of the Claims 1∼5, which is **characterised in that** the method includes following steps,
(1) Take the raw materials and mix them evenly into agglomerate composites;
(2) Pour the composites into injection device of thermosetting plastic injection machine;
(3) Inject the composites into mould which will be heated to a temperature of between 130°C and 150°C, and maintain pressure for solidification;
carry out vacuum extraction to the mould with vacuum degree of between minus 0.06 Pa and minus 0.09 Pa; apply high-pressure injection with injection pressure of 100 kg per square centimeter, and maintain the pressure for solidification for over 2 to 3 minutes after injection;
(4) Open the mould and take out finished product.

## Patentansprüche

1. Sanitärartikel aus einem Verbundstoff auf Harzbasis, wobei der Sanitärartikel durch Vermischen und Einspritzen von Ausgangsstoffen hergestellt und durch Formen verfestigt ist, wobei die Bestandteile der Ausgangsstoffe und deren Gewichtsverhältnisse die folgenden sind:
| | |
|---|---|
| Ungesättigtes Polyesterharz | 14%-30%; |
| Polyester-Schrumpfverhinderungsmittel | 6%-14%; |
| Verstärkungsfaser | 11%-37%; |
| Tafelspath ("Scale-Stone") | 10%-20%; |
| Calciumcarbonat | 25%-40%; |
| Initiator | 0,8%-2,4%; |
und das ungesättigte Polyesterharz durch Verdünnen von ungesättigtem Harz mit Styrol hergestellt ist, wobei das Gewichtsverhältnis zwischen Styrol und dem ungesättigten Harz folgendermaßen ist:
| | |
|---|---|
| Styrol | 60%-65%; |
| Ungesättigtes Harz | 35%-40%. |

2. Sanitärartikel aus einem Verbundstoff auf Harzbasis gemäß Anspruch 1, wobei das ungesättigte Harz ein ungesättigtes Polyesterharz vom o-Typ oder ein ungesättigtes Polyesterharz vom m-Phthalsäure-Typ ist.

3. Sanitärartikel aus einem Verbundstoff auf Harzbasis gemäß Anspruch 1, wobei das Polyester-Schrumpfverhinderungsmittel durch Verdünnen von Anti-Schrumpf-Polyester mit Styrol hergestellt ist, und das Gewichtsverhältnis zwischen Styrol und dem Polyester folgendermaßen ist:
| | |
|---|---|
| Styrol | 33%-37%; |
| Polyester | 63%-67%. |

4. Sanitärartikel aus einem Verbundstoff auf Harzbasis gemäß Anspruch 1, wobei die Verstärkungsfaser Nylonfaser oder Polyphosphazen-Makrofaser ist.

5. Sanitärartikel aus einem Verbundstoff auf Harzbasis gemäß Anspruch 1, wobei die Ausgangsstoffe außerdem Farbpaste mit einem Gewichtsverhältnis von 1%-4% enthalten.

6. Sanitärartikel aus einem Verbundstoff auf Harzbasis gemäß Anspruch 1, wobei die Ausgangsstoffe außerdem Aluminiumhydroxid mit einem Gewichtsverhältnis von 6%-10% enthalten.

7. Sanitärartikel aus einem Verbundstoff auf Harzbasis gemäß Anspruch 1, wobei der Initiator tert-Butylperoxybenzoat und Benzoylperoxid enthält und das Gewichtsverhältnis zwischen tert-Butylperoxybenzoat und Benzoylperoxid 1:2 beträgt.

8. Verfahren zur Herstellung des Sanitärartikels aus einem Verbundstoff auf Harzbasis gemäß irgendeinem der Ansprüche 1 bis 5, **dadurch gekennzeichnet, dass** das Verfahren die folgenden Schritte umfasst:
(1) Bereitstellen der Ausgangsstoffe und deren gleichmäßiges Vermischen zu Agglomerat-Verbundstoffen,
(2) Gießen der Verbundstoffe in eine Einspritzvorrichtung einer Einspritzmaschine für wärmeaushärtende Kunststoffe;
(3) Einspritzen der Verbundstoffe in eine Form, welche auf eine Temperatur zwischen 130 ° und 150 °C erhitzt wird, und Aufrechterhalten von Druck zur Verfestigung;
Durchführen von Vakuumextraktion an der Form mit einem Vakuumgrad zwischen minus 0,06 Pa und minus 0,09 Pa; Durchführen von Hochdruckeinspritzung mit einem Einspritzdruck von 100 kg pro cm² und Aufrechterhalten des Drucks zur Verfestigung für 2 bis 3 Minuten nach dem Einspritzen;
(4) Öffnen der Form und Entnehmen des fertig gestellten Produkts.

## Revendications

1. Article sanitaire en matériau composite à base de résine, cet article sanitaire étant obtenu en mélangeant et injectant des matériaux bruts et solidifiés par des moules, les composants de ces matériaux bruts et leurs rapports pondéraux étant les suivants :
| | |
|---|---|
| résine polyester insaturée | 14% - 30%, |
| agent anti-retrait polyester | 6% - 14%, |
| fibre de renfort | 11% - 37%, |
| écailles de pierre | 10% - 20%, |
| carbonate de calcium | 25% - 40%, |
| initiateur | 0.8 % - 2.4 %, |
et le polyester insaturé étant obtenu en diluant une résine insaturée avec du styrène, et les rapports pondéraux entre le styrène et la résine insaturée étant les suivants :
| | |
|---|---|
| styrène | 60% - 65%, |
| résine insaturée | 35% - 40%. |

2. Article sanitaire en matériau composite à base de résine conforme à la revendication 1, dans lequel la résine insaturée est une résine polyester insaturée de type o ou une résine polyester insaturée de type acide m phtalique.

3. Article sanitaire en matériau composite à base de résine conforme à la revendication 1, dans lequel l'agent anti-retrait polyester est obtenu en diluant un polyester anti-retrait avec du styrène et le rapport pondéral entre le styrène et le polyester étant le suivant :
| | |
|---|---|
| styrène | 33% - 37% |
| polyester | 63% - 67% |

4. Article sanitaire en matériau composite à base de résine conforme à la revendication 1, dans lequel la fibre de renfort est une fibre de nylon ou une macro-fibre de polyphosphazène.

5. Article sanitaire en matériau composite à base de résine conforme à la revendication 1, dans lequel les matériaux bruts renferment également une pate colorée avec un rapport pondéral de 1 % - 4 %.

6. Article sanitaire en matériau composite à base de résine conforme à la revendication 1, dans lequel les matériaux bruts renferment également de l'hydroxyde d'aluminium avec un rapport pondéral de 6 % - 10 %.

7. Article sanitaire en matériau composite à base de résine conforme à la revendication 1, dans lequel l'initiateur renferme du tert butyl peroxybenzoate et du péroxyde de benzoyle et le rapport pondéral entre le tert butyl peroxybenzoate et le péroxyde de benzoyle est de 1:2.

8. Procédé d'obtention d'un article sanitaire en matériau composite à base de résine conforme à l'une quelconque des revendications 1 à 5, **caractérisé en ce qu'**
il comprend les étapes consistant à :
(1) se procurer les matériaux bruts et les mélanger régulièrement pour obtenir des composites agglomérés,
(2) verser les composites dans un dispositif d'injection d'une machine d'injection de matière plastique thermodurcissable,
(3) injecter les composites dans des moules destinés à être chauffés à une température comprise entre 130°C et 150°C et maintenir la pression pendant la solidification,
faire le vide dans le moule sous un taux de vide compris entre moins 0.06 Pa et moins 0.09 Pa, mettre en oeuvre l'injection haute pression avec une pression d'injection de 100 kg par centimètre carré et maintenir la pression pour la solidification pendant deux à trois minutes après l'injection,
(4) ouvrir le moule et prélever le produit fini.
